# EUROPEAN PATENT APPLICATION

(11) **EP 4 723 563 A1**
(43) Date of publication of application: **08.04.2026**
(21) Application number: 24829761.6
(22) Date of filing: 22.01.2024
(51) Int. Cl.: H04L 12/40

(54) **COMMUNICATION METHOD, ELECTRONIC DEVICE AND COMPUTER READABLE MEDIUM**

(30) Priority: 29.06.2023 CN 202310793110
(71) Applicant: ZTE CORPORATION, Shenzhen, Guangdong 518057 (CN)
(72) Inventor: SONG, Jie, Shenzhen, Guangdong 518057 (CN); ZHOU, Jianfeng, Shenzhen, Guangdong 518057 (CN); ZHANG, Qiang, Shenzhen, Guangdong 518057 (CN); FAN, Wanpeng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/073483
(87) International publication number: WO 2025/001098

(57) **Abstract**

The embodiments of the present application provide a communication method, an electronic device and a computer readable medium. The method comprises: a first network element communicates with a second network element on the basis of a target bus, wherein the target bus comprises a service bus SBI and/or a data channel bus (DCI), the SBI is used for providing interaction of signaling and first data between network elements, and the DCI is used for providing interaction of second data between network elements.

## Description

### CROSS-REFERENCE TO RELEVANT APPLICATIONS

The present application claims priority to Chinese Application No. 202310793110.7, filed with the Chinese Patent Office on June 29, 2023, with the title "COMMUNICATION METHOD, ELECTRONIC DEVICE AND COMPUTER READABLE MEDIUM", the disclosure of which is hereby incorporated by reference in its entirety.

### TECHNICAL FIELD

The present application belongs to the field of communication technology, specifically relating to a communication method, an electronic device, and a computer readable medium.

### BACKGROUND

With the continuous development of communication technology, technologies such as 6G will help achieve deep integration between the real physical world and the virtual digital world, building a new world of intelligent connectivity and digital twins for all things. New businesses such as immersive Extended Reality (XR), holographic communication, sensory interconnection, intelligent interaction, communication perception, inclusive intelligence, digital twins, and global coverage will be widely and deeply applied in people's lives, social production, public services, and other fields.

Correspondingly, with the emergence of new businesses, it will inevitably bring massive amounts of data that require interaction, processing, etc., making existing communication network architectures (such as 5G communication network architectures) no longer applicable. For the 5G communication network architecture, the signaling interaction and data interaction between core network elements are mainly achieved through Service Based Interface (SBI), which has certain limitations on the size and type of data transmission. Once there is a large amount of interaction and diverse types of data that need to be transmitted, it will lead to problems such as low data transmission efficiency and poor reliability.

### SUMMARY

The purpose of the embodiments of the present application is to provide a communication method, electronic device, and computer-readable medium.

To solve the above technical problem, the embodiments of the present application are implemented through the following aspects.

In the first aspect, the embodiments of the present application provide a communication method, applied to a first network element, the method comprising: communicating with a second network element based on a target bus; wherein the target bus comprises a service based bus SBI and/or a data channel bus DCI, the SBI is used to provide interaction of signaling and first data between network elements, and the DCI is used to provide interaction of second data between network elements.

In the second aspect, the embodiments of the present application provide a communication method, applied to a second network element, the method comprising: communicating with a first network element based on a target bus; wherein the target bus comprises a service based bus SBI and/or a data channel bus DCI, the SBI is used to provide interaction of signaling and first data between network elements, and the DCI is used to provide interaction of second data between network elements.

In the third aspect, the embodiments of the present application provide an electronic device, comprising: a memory, a processor, and computer executable instructions stored on the memory and executable on the processor, wherein the computer executable instructions, when executed by the processor, implements the steps of the method described in the first or second aspect.

In the fourth aspect, the embodiments of the present application provide a computer readable storage media for storing computer executable instructions that, when executed by a processor, implements the steps of the method described in the first or second aspect.

### BRIEF DESCRIPTION OF DRAWINGS

In order to more clearly illustrate the technical solution of the embodiments of the present application, the accompanying drawings required for describing the embodiments will be briefly introduced below. Obviously, the accompanying drawings in the following description are some embodiments of the present application. For those skilled in the art, other accompanying drawings can also be obtained based on these drawings without exerting creative efforts.
Fig. 1a shows a schematic diagram of the communication network architecture provided in an embodiment of the present application.
Fig. 1b shows a schematic diagram of the NDU provided in an embodiment of the present application.
Fig. 2 shows one of the flowcharts of the communication method provided in an embodiment of the present application.
Fig. 3 shows a schematic diagram of the decision process of the data transmission mode provided in an embodiment of the present application.
Fig. 4a shows one of the schematic diagrams of the data service communication process provided by an embodiment of the present application.
Fig. 4b shows the second schematic diagram of the data service communication process provided by an embodiment of the present application.
Fig. 4c shows the third schematic diagram of the data service communication process provided by an embodiment of the present application.
Fig. 4d shows the fourth schematic diagram of the data service communication process provided by an embodiment of the present application.
Fig. 5 shows the second flowchart of the communication method provided in an embodiment of the present application.
Fig. 6 shows one of the structural schematic diagrams of the communication device provided in an embodiment of the present application.
Fig. 7 shows the second schematic diagram of the structure of the communication device provided in an embodiment of the present application.
Fig. 8 is a schematic diagram of the hardware structure of an electronic device implementing the communication method provided in an embodiment of the present application.

### DETAILED DESCRIPTION

To enable those skilled in the art to better understand the technical solutions in the present application, the following will clearly and completely describe the technical solutions in the embodiments of the present application in conjunction with the accompanying drawings in the embodiments of the present application. Obviously, the described embodiments are part of the embodiments of the present application, not all of them. Based on the embodiments in the present application, all other embodiments obtained by those skilled in the art without making creative efforts shall fall within the protection scope of the present application.

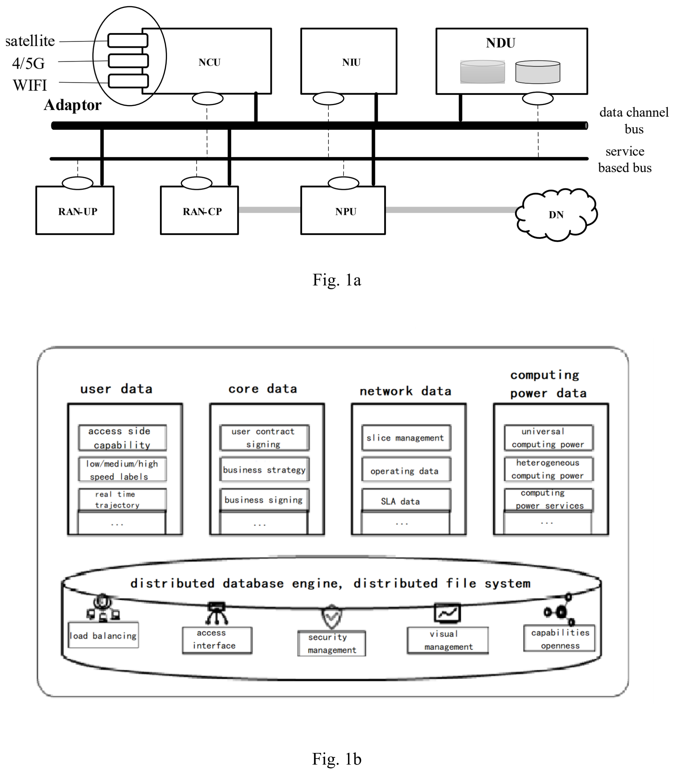

As shown in Fig. 1a, it is a schematic diagram of a communication network architecture provided in the present application. This communication network architecture is a minimalist, distributed, autonomous, highly cohesive, and low coupling future network architecture (also known as 6G communication network architecture, etc.), designed with data as the center, and network capabilities developed around data to meet the requirements of future networks, such as perception, artificial intelligence (AI), and other new capabilities and data services.

In this embodiment, the communication network architecture may include but is not limited to one or more of Network Control Unit (NCU), Network Packet Unit (NPU), Network Data Unit (NDU), Network Intelligent Unit (NIU), etc. The NCU, NPU, NIU, and NDU correspond to the control plane, user plane, intelligent plane, and data plane of the communication network architecture, respectively, which can improve the problems of large number of network elements and complex signaling in the existing communication network architecture, achieve flexible and customizable networks, and enable future innovation in human-machine-object virtual universal services. It can be understood that the naming of each network unit in the communication network architecture provided in the present application can be, but is not limited to, the aforementioned NCU, NPU, NIU, NDU, etc. That is to say, the naming of each network unit in the communication network architecture provided in the present application can be flexibly designed according to communication standards or protocols. And, the communication network architecture may include one or more identical network elements (such as NDUs, etc.), without limitation here.

In this case, the following will first introduce each network element in the aforementioned communication network architecture.

NCU: The NCU serves as the network control hub in the communication network architecture, providing network control relevant functions. Such as but not limited to mobility management, session management, and other extended functions, such as deterministic communication, computing network collaboration, and communication sensing integration; also such as responsible for driving tasks, completing collaborative tasks such as connectivity, computing power, intelligence, and perception.

NPU: The NPU is used to provide network packet forwarding relevant functions. For example it can inherit the basic functions of user plane data forwarding in relevant communication network architectures (such as 5G network architecture, 4G network architecture, etc.), and introduce user plane programmable functions to achieve the goal of flexibly defining user plane processing logic, while evolving towards functional characteristics such as network computing service perception, deterministic communication, and fine-grained subnets.

NIU: The NIU is used to provide intelligent endogenous relevant functions. Such as providing artificial intelligence (AI) task scheduling management, online reasoning, online training, knowledge model warehouse and other functions, as well as achieving cross layer and cross domain intelligence among multiple nodes through distributed learning collaboration, achieving extremely simplified, elastic, and intelligent networks internally, and providing flexible AI services to applications externally.

NDU: As an independent data plane, the NDU is used to provide data management relevant functions, such as integrating (or aggregating) and processing the Unified Data Repository (UDR), Unstructured Data Storage Function (UDSF), etc. uniformly through NDU to form an independent data plane.

In one implementation, the NDU may also have the following characteristics.
(a) NDU can achieve the separation of data and business, reduce the coupling between data processing and business processing, provide consistency services for data security, management, and access, and open data service capabilities to the outside through standardized interfaces.
(b) In NDU, data is classified, designed, stored, aggregated, and processed, and network capabilities are developed around the data, enable the system to have stronger data integrity and consistency, making it easy to utilize professional data storage and access technologies to achieve consistency and simplification of data processing logic.
(c) NDU can achieve unified storage and unified management of various data, reduce data redundancy, lower the occupation of storage resources and the overhead of network resources, and avoid data consistency issues.
(d) NDU integrates the original multiple data interactions, and after simplifying signaling and merging data, it acquires and updates the required data in one go.
(e) The NDU retains and enhances the UDR and UDSF in relevant communication network architectures (such as 5G network architecture, 4G network architecture, etc.), adds file interfaces to support the efficient transmission of directories and files; and adds interfaces such as Remote Direct Memory Access (RDMA) to support the efficient transmission of block data.
(f) NDU defines a self-explanatory and self-executing framework for customizing 5G data models, which can self-adapt during inter-vendor intercommunication and user migration.
(g) NDU contains data with different characteristics, which can be stored in different ways (such as databases, files, blocks, etc.) and provide different access methods. And utilizing the inherent mechanisms of distributed databases, distributed files, etc. to achieve data security and high reliability.

It is worth noting that the NDU, as an independent data plane, in addition to providing core data and user data, the present application also adds network data and computing power data, as shown in Fig. 1b. The following is an introduction to each type of data respectively.

User data: refers to end-to-end data information of users, such as user access side capability data, low/medium/high speed tag data, real-time user trajectory, current network capabilities, ongoing tasks, ongoing business, etc.

Core data: refers to the core static data of users in the network, such as user subscription data, business strategy data, business subscription data, etc.

Network data: It can include but is not limited to management data, operational data, SLA data, etc. of various nodes in the network, such as slice or subnet management data, network node load situation, network service SLA data, network element data, etc.

Computing power data: refers to the user's consumption of computing power resources and the service data built on them, such as computing power resource data, computing power service data, etc.

For the aforementioned data, NDU can provide data processing capabilities including but not limited to collection, preprocessing, storage, aggregation, analysis, orchestration, forwarding, AI services, as well as data management capabilities including but not limited to distributed storage, load balancing, access control, security management, reliability management, etc. At the same time, a unified data format can be defined and data services can be provided to the outside through a dual bus data service, solving the problem of independent data planes being unable to be decoupled from different manufacturers.

It can be understood that compared to the multiple signaling and data interactions required in relevant technologies, the communication network architecture provided in the present application uniformly stores data, integrates the original multiple data interactions, simplifies signaling and merges data, and obtains and updates the required data in one go. Wherein the simplification of signaling can be completed by NCU, and the merging of data can be completed by NDU.

Based on the above description, for the communication network architecture provided in the present application, please refer to Fig. 1a again. The interaction between the internal network elements (such as NCU, NDU, NIU, NPU, etc.) can rely on dual bus (i.e. target bus) architecture. One is to reuse the Service Based Interface (SBI) in the relevant communication network architecture (such as 5G network architecture, 4G network architecture, etc.), which continues the service based design concept and extends the scope of servitization from the core network control plane to the user plane, further extending to the wireless access side, and realizing end-to-end servitization in the mobile network field. The other one is the newly added data bus in the present application, namely data channel or data channel bus or data channel interface (DCI), which enables different network units (such as NCU, NDU, NIU, etc.) to interact with each other through data channels to achieve efficient data acquisition and processing. For example, in this embodiment, the data channel is used to provide high-speed transmission of data, such as core data, network data, computing power data, etc.

Below are introductions to SBI and DCI respectively.

Wherein for the SBI, it may have but is not limited to the characteristics shown in (a) - (c) below.
(a) The service based bus can provide interaction of control messages between network units. Based on the SBA architecture, network units exchange signaling and data through a standardized SBI; SBI is based on the HTTP/2 protocol and has certain limitations in terms of data transmission size, type, and efficiency.
(b) Inherit and integrate existing SBI, and evolve on the existing basis; The transport layer uniformly adopts the HTTP/3 protocol to standardize different service messages and maintain the convenience and timeliness of data exchange.
(c) SBI, as a low throughput and high-performance signaling bus, is suitable for data services with low data interaction and can be completed through signaling interaction.

And, for the DCI, it may have but is not limited to the characteristics shown in (a) - (d) below.
(a) DCI, as a high-throughput and highly reliable data bus, is designed for the transmission and processing of non-real time batch data between network elements or data that exceeds SBI capabilities or large batch data. It is suitable for data services with large volumes, diverse types, and frequent interactions, making data transmission between network units more efficient, secure, and reliable. Especially suitable for large batch data transmission scenarios such as endogenous AI, such as data used for AI training, machine learning models, etc.
(b) DCI is an advanced data transmission technology that provides a faster, safer, and more reliable way to transmit different types of data. This method is network-based and can use any type of communication protocol.
(c) DCI supports a wider range of protocols, flexible configuration of communication protocols, and can support various methods including but not limited to FTP access to directories and files, block migration, etc.; Different data access ways can be provided for different data storage ways (such as databases, files, memory, etc.), such as Transmission Control Protocol (TCP), Hyper Text Transfer Protocol (HTTP), File Transfer Protocol (FTP), RDMA, etc.
(d) DCI security considerations: When transmitting data through DCI, both parties can determine the communication encryption method based on data, protocol, and other information to achieve secure data transmission. It includes but is not limited to identity authentication (such as tokens, which can be authorized and authenticated through SBI), standardized access interfaces and methods, to prevent unauthorized users from accessing information illegally; DCI uses encryption technology to protect data security and prevent information from being eavesdropped or leaked; DCI uses reliable technology to ensure data integrity, avoiding damage or tampering during transmission, supporting multiple types of data transmission, and supporting flexible configuration of communication encryption methods.

In the aforementioned communication network architecture provided in the present application, on the one hand, unified storage and management of data is achieved through independent data planes, providing consistent and standardized data services, which can systematically solve the challenges of control and value realization of non user plane data in communication networks. It can be understood that the independent data plane aims to support end-to-end data collection, transmission, storage, analysis, and sharing, solving how to provide data conveniently, efficiently, and securely to various network units in the future core network. On the premise of complying with privacy protection and data security, it provides trustworthy data services, realizes cross domain and cross vendor data sharing, improves data service efficiency and data consistency; By building a unified platform capability, different forms of data services can be provided to meet flexible and diverse service needs.

On the other hand, communication between network units is carried out through a dual bus architecture of SBI and DCI. Wherein SBI provides signaling and data interaction between various network elements, while DCI provides efficient transmission and processing of batch data. SBI and DCI do not affect each other, complement each other's advantages, and can be processed asynchronously and executed concurrently. Of course, when implementing data transmission between network elements, it is possible to choose to transmit data through SBI or DCI according to actual needs, in order to ultimately achieve efficient collaboration between SBI and DCI in data services.

It should be noted that HPMLN in Fig. 1 represents home public land mobile network, while VPMLN represents visited public land mobile network.

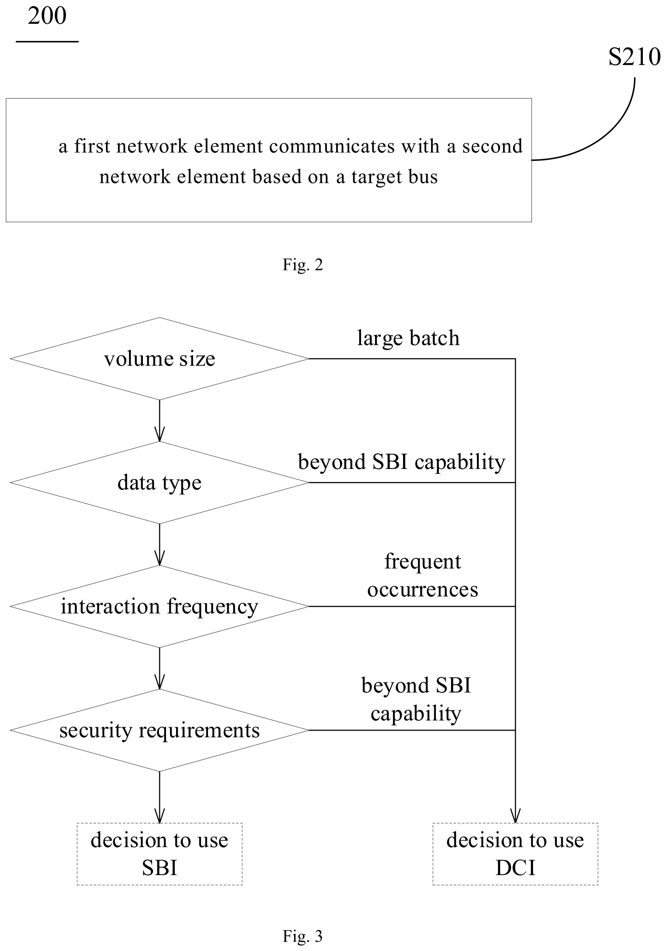

Based on the communication network architecture provided above, Fig. 2 shows a flowchart of a communication method 200 provided in the embodiments of the present application, which can be executed by a first network element, such as software or hardware installed in the first network element. As shown in Fig. 2, the method 200 may include the following steps.

S210: The first network element communicates with the second network element based on the target bus.

Wherein the target bus comprises SBI and/or DCI, the SBI is used to provide interaction of signaling and first data between network elements. Optionally, the first data can be data with low data interaction and can be completed through signaling interaction. For example, the first data can be data with a volume lower than the first threshold, data with an interaction frequency lower than the second threshold, etc. wherein the first threshold and the second threshold can be set according to actual needs and are not limited here.

The DCI is used to provide interaction of second data between network elements. Wherein the second data comprises at least one of the following (11) - (13).
(11) Data with a volume exceeding the first threshold.
(12) Data beyond the service capabilities of SBI, where the SBI service capability may include the data types supported by the SBI for transmission, the data security requirements of the data supported by the SBI for transmission, and so on.
(13) Data with interaction frequency greater than the second threshold.

That is to say, the communication and data exchange between network elements will rely on the dual bus interconnection architecture, and DCI will be extended (added) on the basis of retaining the current 5G communication network architecture SBI. As a high-throughput and highly reliable data link, DCI will be used to transmit data that requires frequent interaction, large data volume, and diverse data types, achieving efficient, reliable, and secure transmission of core network data, making data transmission between network elements more efficient, secure, and reliable. Especially suitable for large batch data transmission scenarios such as endogenous AI, such as data used for AI training, machine learning models, and so on.

In the present application, the first network element can be any one of NCU, NPU, NDU, or NIU, and the second network element can be any one of NCU, NPU, NDU, or NIU. That is to say, in the network architecture provided in the present application, the first network element and the second network element can be the same or different network elements, such as both the first network element and the second network element can be NCU, NPU, NDU, or NIU, or such as the first network element can be any one of NCU, NPU, NDU, NIU, and the second network element can be any one of NCU, NPU, NDU, NIU except for the first network element.

It is worth noting that there can be various communication scenarios based on dual bus implementation between the first network element and the second network element. For example, in scenarios where frequent interaction, batch acquisition, or storage of relevant data is required between network elements, such as when the first network element needs to obtain relevant data from NDU, such as core data, user data, network data, computing power data, etc., the data volume may be large and the data types may be different. Therefore, DCI can achieve reliable, efficient, and secure transmission of data.

For example, NIU (such as the first network element) needs to obtain a large amount of analysis, training, historical and other data for AI analysis, model training and other scenarios. Wherein this scenario usually involves the transmission of big data, such as the data that AI needs to process having different formats and data volumes, and using DCI for transmission is more efficient.

For example, cross domain data access (such as integration of computing and networking, end-to-end Quality of Service (QoS) assurance), federated learning model training, NWDAF data collection, and other scenarios that require collaboration between network units can all use DCI bus to improve the transmission efficiency of models, gradients, and other data, making data services more secure and efficient.

In the present embodiment, communication between the first network element and the second network element is carried out through the use of dual buses (i.e. SBI and DCI), which can support efficient and reliable transmission of data with large batches, high frequencies, and other requirements on one hand; on the other hand, it can also meet the real-time and customized requirements in communication networks.

Based on this, in one implementation, for the process of communication between the first network element and the second network element based on the target bus to achieve data communication services, the first network element (i.e., the data requester) can receive the data transmission notification sent by the second network element (i.e., the data provider) based on the SBI, and the data transmission notification carries or indicates the data transmission mode to indicate whether the second network element transmits target data to the first network element based on SBI or DCI. Therefore, by indicating the data transmission mode, the first network element and the second network element can have a consistent understanding of the transmission mode of target data, thereby improving the transmission reliability of target data.

Wherein the data transmission notification can be sent by the second network element based on the data subscription service or data service request of the first network element, or by the second network element according to its own data transmission needs, etc., without limitation here.

For example, assuming that the data transmission notification can be sent by the second network element based on the data subscription service of the first network element, then the first network element can send a data subscription request or a second data service request to the second network element based on the SBI before receiving the data transmission notification sent by the second network element, in order to request the subscription of target data. Wherein the data subscription request is used to subscribe to the target data from the second network element, and the second data service request is used to request the target data from the second network element.

For example, assuming that the data transmission notification is sent by the second network element according to its own data transmission needs, the second network element can send the data transmission notification to the first network element when it determines that it needs to provide data services with the first network element, or when it determines that the target data subscribed or requested by the first network element is changed.

Based on this, in one possible implementation, for the data transmission mode, the second network element can determine (decide) the data transmission mode based on the relevant information of the target data (i.e. decision information), and save the decision result for the next interaction, improving the efficiency of data interaction.

Wherein the relevant information of the target data can be carried in the data subscription request or the second data service request, or determined by the second network element itself based on the requested or subscribed target data, without limitation here.

Optionally, the relevant information of the target data may include at least one of the following (21) - (24).
(21) The volume size of the target data. For example, in the case where the volume size does not exceed the first threshold (i.e., the data size is small), it is determined to transmit the target data to the first network element based on SBI, and vice versa (i.e., the data size is large), the target data is transmitted to the first network element based on DCI.
(22) The data type of the target data. For example, whether the data type of the target data belongs to the range of data types supported by the SBI, if so, the target data is transmitted to the first network element based on SBI, otherwise, the target data is transmitted to the first network element based on DCI.

Wherein the range of data types not supported by SBI may include but is not limited to data types stored in files, directories, and blocks, such as transmitting target data to the first network element based on DCI when the target data is stored in files, directories, and blocks.
(23) The data interaction frequency for the target data. For example, in the case where the data interaction frequency is not greater than the second threshold, it is determined to transmit target data to the first network element based on SBI, and vice versa, target data is transmitted to the first network element based on DCI.
(24) The data security requirements for the target data. For example, in the case where the data security requirements comply with SBI capabilities, it is determined to transmit target data to the first network element based on SBI, or in the case where the data security requirements are high or have special security requirements, or exceed SBI capabilities, the target data is transmitted to the first network element based on DCI.

Of course, when deciding on the transmission mode of the target data based on the aforementioned (21) - (24), the decision can be made according to any one of the aforementioned (21) - (24), or based on multiple of the aforementioned (21) - (24).

For example, when making decisions based on multiple of the aforementioned (21) - (24), the importance level of each decision information in (21) - (24) can be determined separately, and then decisions can be made based on each decision information in sequence according to the importance level. For example, when the decision information includes the aforementioned (21) - (24), the decision process can include but is not limited to the one shown in Fig. 3.

In one implementation, if the second network element determines to transmit target data to the first network element based on SBI according to the relevant information of the target data, the data transmission notification may also carry the target data to achieve fast and efficient transmission of the target data.

Alternatively, if the second network element determines to transmit target data to the first network element based on DCI according to the relevant information of the target data, the data transmission notification may also carry or indicate at least one of the following protocol relevant information and data encryption relevant information for the transmission of the target data. The protocol relevant information may include the transmission protocol, IP address, transmission port, etc. used during the transmission of the target data. The relevant information of data encryption may include the encryption algorithm, key, token, and other information used during the transmission of the target data. Thus, to ensure that the first network element can achieve correct reception of the target data.

For example, after receiving the data transmission notification, the first network element may send a first data service request to the second network element based on the protocol relevant information and data encryption relevant information carried in the data transmission notification, in order to request the target data. Then, after receiving the first data service request, the second network element may send a data service response to the first network element based on the DCI. Then, after receiving the data service response sent by the second network element based on the DCI, the first network element may also read the target data from the data service response carrying the target data based on the protocol relevant information and/or data encryption relevant information. Thus, secure and efficient transmission of the target data can be achieved.

It is worth noting that there can be multiple types of target data depending on the communication scenario. For example, it can be control plane data requested from NCU, user plane data requested from NPU, intelligent plane data requested from NIU, or data plane data requested from NDU. It can be understood that in the present application, in addition to the aforementioned NDU providing data management related functions, the NCU, NPU, or NIU may also cache certain corresponding data as data providers for data communication services.

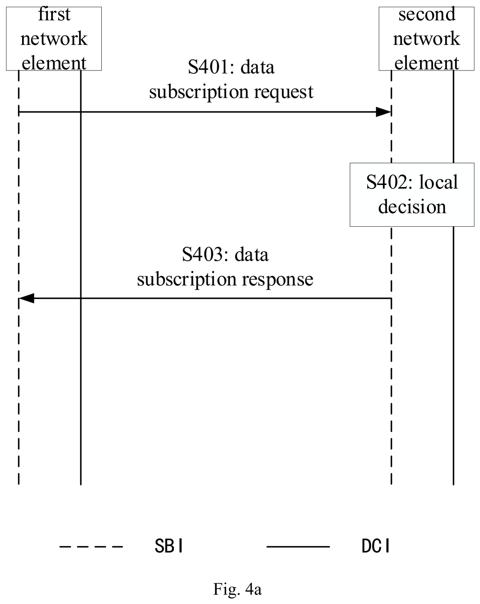

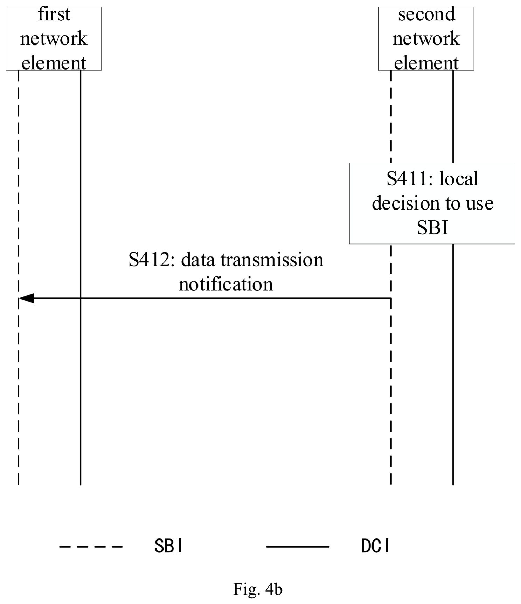

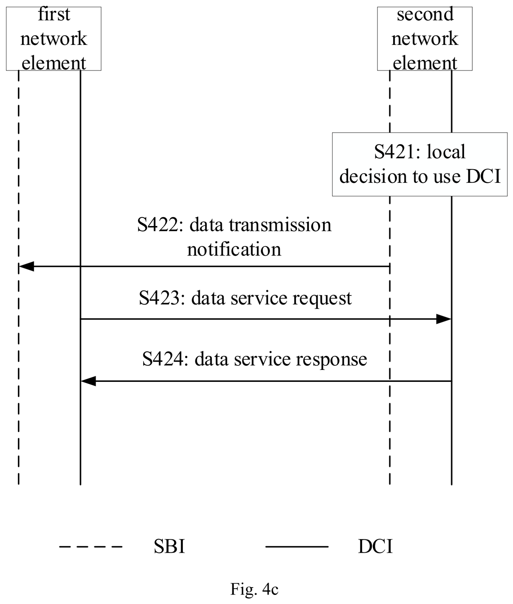

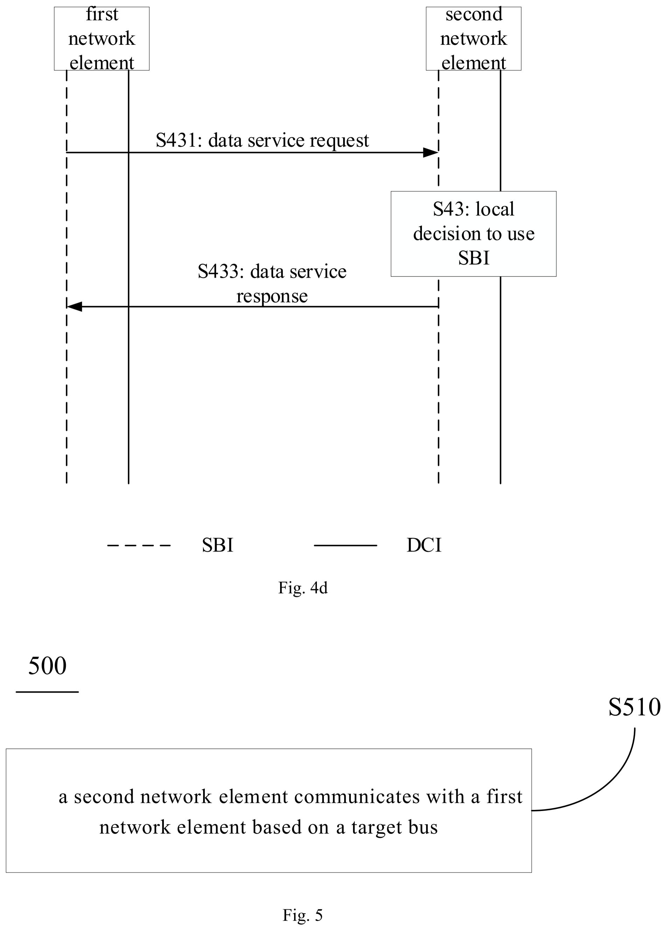

Furthermore, based on the above description and in conjunction with Figs. 4a-4d, a further exemplary introduction will be given to the communication method implemented based on the communication network architecture shown in Fig. 1a provided in the present application. The content is as follows. Wherein the first network element is the service requester, and the second network element is the service provider. The first network element can be any one of the NCU, NPU, NIU, or NDU, and the second network element can also be any one of the NCU, NPU, NIU, or NDU.

### Example 1

S401: The first network element initiates a data subscription request to the second network element through SBI.

S402: After receiving the data subscription request, the second network element can determine (decide) how to transmit the target data based on the relevant information of the target data requested in the data subscription request. Wherein the relevant information of the target data (i.e. decision basis) includes the volume size, data type, interaction frequency, security requirements, or other information of the subscribed target data. The decision content includes the data transmission mode (i.e. whether it is through SBI or DCI).

S403: The second network element sends a data subscription response (i.e. data transmission notification) to the first network element. Wherein if the second network element decides to use DCI to transmit the target data, the data subscription response will carry the data transmission mode (such as whether to transmit the target data through SBI or DCI), protocol relevant information, data encryption relevant information (such as tokens), etc.

In Example 1, by adding a local decision process in the data subscription process to decide whether to transmit target data through SBI or DCI, it can effectively improve data transmission efficiency and reliability.

### Example 2

On the basis of Example 1, if the second network element determines that the target data subscribed by the first network element is changed, the implementation process may include:
S411: The second network element makes a local decision to use the SBI bus for data transmission notification, based on information such as data volume size, data type, interaction frequency, security requirements, etc. The decision content includes the data transmission mode (via SBI).
S412: The second network element sends a data transmission notification to the first network element through the SBI bus, which includes the data transmission mode (i.e. SBI), subscribed target data, etc.

In Example 2, the data notification process adds a local decision process based on the existing SBI to determine whether data notification should be made through SBI or DCI. For the SBI method, data transmission notification can be directly made through SBI.

### Example 3

On the basis of Example 1, if the second network element determines that the target data subscribed by the first network element is changed, then its implementation process can include the following steps.

S421: The second network element makes a local decision to use the DCI bus for data notification. The decision is based on information such as data volume size, data type, interaction frequency, and security requirements. The decision content includes the data transmission mode (i.e. DCI), as well as protocol relevant information and data encryption relevant information (such as tokens) as needed.

S422: The second network element sends a data transmission notification to the first network element through the SBI bus, which includes data transmission modes (via DCI), protocol relevant information, data encryption relevant information, etc.

S423: The first network element sends a data service request to the second network element based on the protocol relevant information and data encryption relevant information carried in the data transmission notification received, and through the data transmission mode (i.e. DCI) indicated in the data transmission notification.

S424: The second network element sends a data service response to the first network element through the DCI bus, which includes the target data of the data service request.

In Example 3, a local decision process is added to the data notification process to determine whether data notification should be made through SBI or DCI. For the DCI method, the second network element firstly notifies the data transmission mode, protocol relevant information, data encryption relevant information, etc. through SBI, and the first network element then initiates a data service request through DCI. Wherein due to DCI can support a wide range of data transmission protocols and provide support for data transmission beyond SBI's capabilities, DCI based data transmission facilitates efficient and secure transmission of large batches of data and diverse format data.

### Example 4

S431: The first network element initiates a data service request to the second network element through the SBI bus.

S432: The second network element receives the data service request and decides how to transmit the target data based on the relevant information of the requested target data. Wherein the relevant information of the target data (i.e. decision basis) includes subscription data volume size, data type, interaction frequency, security requirements, etc. The decision content includes data transmission mode (whether through SBI or DCI), protocol relevant information, data encryption relevant information (such as tokens), etc.

S433: The second network element sends a data service response (i.e. data transmission notification) to the first network element through the SBI bus, which includes the target data requested by the data service request.

In Example 4, a local decision process is added to the data service process to determine whether to respond to data through SBI or DCI. For the SBI method, data service response is directly conducted through SBI, improving the security and efficiency of data transmission.

Fig. 5 shows a flowchart of a communication method 500 provided by the embodiments of the present application, which can be executed by the second network element, such as software and/or hardware installed in the second network element. As shown in Fig. 5, the method 500 may include but is not limited to the following steps.

S510: The second network element communicates with the first network element based on the target bus.

Wherein the target bus comprises a service based bus SBI and/or a data channel bus DCI, the SBI is used to provide interaction of signaling and first data between network elements, and the DCI is used to provide interaction of second data between network elements.

Optionally, the second data comprises at least one of the following: data with volume exceeding the first threshold, data beyond the service capabilities of SBI, and data with interaction frequency greater than the second threshold.

Optionally, communicating with the first network element based on the target bus comprises: the second network element determines the data transmission mode based on relevant information of the target data, which comprises whether the second network element transmits the target data to the first network element based on SBI or DCI; a data transmission notification is sent to the first network element based on the SBI, wherein the data transmission notification carries or indicates the data transmission mode.

Optionally, the relevant information of the target data comprises at least one of the following: volume size of the target data; data type of the target data; data interaction frequency of the target data; and data security requirement of the target data.

Optionally, in the case where the data transmission mode comprises that the second network element transmits target data to the first network element based on SBI, the data transmission notification also carries the target data.

Optionally, in the case where the data transmission mode comprises that the second network element transmits target data to the first network element based on DCI, the data transmission notification also carries or indicates at least one of the following: protocol relevant information used for the target data transmission; information relevant to data encryption.

Optionally, communicating with the first network element based on the target bus further comprises: receiving a first data service request sent by the first network element based on the DCI; sending a data service response to the first network element based on the DCI, wherein the data service response carries the target data.

Optionally, communicating with the first network element based on the target bus further comprising at least one of the following: determining whether a data subscription request or a second data service request sent by the first network element based on the SBI is received, and performing the step of determining the data transmission mode based on the relevant information of the target data based on the data subscription request or the second data service request, wherein the data subscription request is used to subscribe to the target data from the second network element, and the second data service request is used to request the target data from the second network element; determining whether the target data is changed, and performing the step of determining the data transmission mode based on the relevant information of the target data.

Optionally, the first network element is any one of network control unit NCU, network packet unit NPU, network data unit NDU, or network intelligence unit NIU; the second network element is any one of the NCU, NPU, NDU, or NIU; wherein the NCU is used to provide network control relevant functions, the NPU is used to provide network packet forwarding relevant functions, the NDU is used to provide data management relevant functions, and the NIU is used to provide intelligent endogenous relevant functions.

It can be understood that method embodiment 500 has the same or corresponding technical features as the aforementioned method embodiment 300. Therefore, the relevant descriptions of the various implementation in method embodiment 500 can refer to the relevant descriptions in the aforementioned method embodiment 300, and achieve the same or corresponding technical effects, which will not be repeated here.

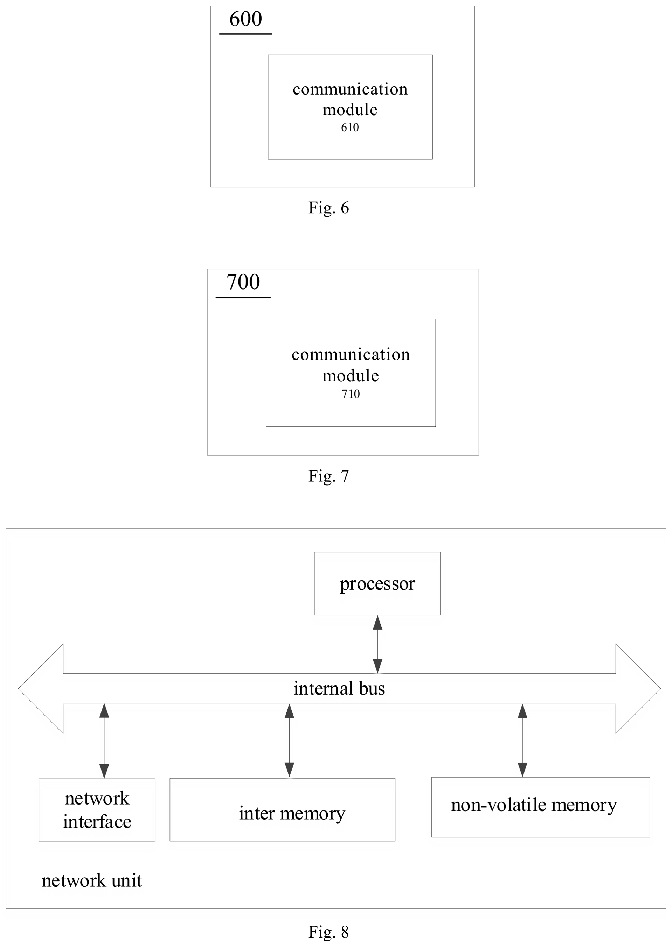

Fig. 6 shows a schematic diagram of the structure of a communication device 600 provided in the embodiments of the present application, which includes a communication module 610 for communicating with the second network element based on the target bus; Wherein the target bus comprises a service based bus SBI and/or a data channel bus DCI, the SBI is used to provide interaction of signaling and first data between network elements, and the DCI is used to provide interaction of second data between network elements.

Optionally, the second data comprises at least one of the following: data with a volume exceeding the first threshold; data beyond the service capabilities of SBI; and data with interaction frequency greater than the second threshold.

Optionally, the communication module 610 is used to communicate with the second network element based on the target bus, comprising: receiving a data transmission notification sent by the second network element based on the SBI; wherein the data transmission notification carries or indicates a data transmission mode, which is used to indicate whether the second network element transmits target data to the first network element based on SBI or DCI.

Optionally, in the case where the data transmission mode indicates that the second network element transmits target data to the first network element based on SBI, the data transmission notification also carries the target data.

Optionally, in the case where the data transmission mode indicates that the second network element transmits target data to the first network element based on DCI, the data transmission notification also carries or indicates at least one of the following: protocol relevant information used for the target data transmission; information relevant to data encryption.

Optionally, the communication module 610 is used to communicate with the second network element based on the target bus, further comprising: sending a first data service request to the second network element based on the data transmission notification, the first data service request is used to request the target data; receiving a data service response sent by the second network element based on the DCI, the data service response carries the target data.

Optionally, before receiving the data transmission notification sent by the second network element based on the SBI, the communication module 610 communicates with the second network element based on the target bus, further comprising: the first network element sending a data subscription request or a second data service request to the second network element based on the SBI; wherein the data subscription request is used to subscribe to the target data from the second network element, and the second data service request is used to request the target data from the second network element.

Optionally, the first network element is any one of network control unit NCU, network packet unit NPU, network data unit NDU, or network intelligence unit NIU; the second network element is any one of the NCU, NPU, NDU, or NIU; wherein the NCU is used to provide network control relevant functions, the NPU is used to provide network packet forwarding relevant functions, the NDU is used to provide data centric data management relevant functions, and the NIU is used to provide intelligent endogenous relevant functions.

Fig. 7 shows a schematic diagram of the structure of a communication device 700 provided in the embodiments of the present application, which includes: a communication module 710 that communicates with a first network element based on a target bus; Wherein the target bus comprises a service based bus SBI and/or a data channel bus DCI, the SBI is used to provide interaction of signaling and first data between network elements, and the DCI is used to provide interaction of second data between network elements.

Optionally, the second data comprises at least one of the following: data with a volume exceeding a first threshold; data beyond the service capabilities of SBI; data with interaction frequency greater than a second threshold.

Optionally, the communication module 710 communicates with the first network element based on the target bus, comprising: determining the data transmission mode based on the relevant information of the target data, which comprises whether the second network element transmits the target data to the first network element based on SBI or DCI; sending a data transmission notification to the first network element based on the SBI, wherein the data transmission notification carries or indicates the data transmission mode.

Optionally, the relevant information of the target data comprises at least one of the following: volume size of the target data; data type of the target data; data interaction frequency of the target data; data security requirement of the target data.

Optionally, in the case where the data transmission mode comprises that the second network element transmits target data to the first network element based on SBI, the data transmission notification also carries the target data.

Optionally, in the case where the data transmission mode comprises that the second network element transmits target data to the first network element based on DCI, the data transmission notification also carries or indicates at least one of the following: protocol relevant information used for the target data transmission; information relevant to data encryption.

Optionally, the communication module 710 communicates with the first network element based on the target bus, further comprising: receiving a first data service request sent by the first network element based on the DCI; sending a data service response to the first network element based on the DCI, wherein the data service response carries the target data.

The communication module 710 communication module 710 communicates with the first network element based on the target bus further comprising at least one of the following: determining whether a data subscription request or a second data service request sent by the first network element based on the SBI is received, and performing the step of determining the data transmission mode based on the relevant information of the target data based on the data subscription request or the second data service request, wherein the data subscription request is used to subscribe to the target data from the second network element, and the second data service request is used to request the target data from the second network element; determining whether the target data is changed, and performing the step of determining the data transmission mode based on the relevant information of the target data.

Optionally, the first network element is any one of network control unit NCU, network packet unit NPU, network data unit NDU, or network intelligence unit NIU; the second network element is any one of the NCU, NPU, NDU, or NIU; wherein the NCU is used to provide network control relevant functions, the NPU is used to provide network packet forwarding relevant functions, the NDU is used to provide data management relevant functions, and the NIU is used to provide intelligent endogenous relevant functions.

The devices 600-700 provided in the embodiments of the present application can execute the various methods described in the previous method embodiments, and achieve the functions and beneficial effects of the various methods described in the previous method embodiments, which will not be repeated here.

Fig. 8 shows a schematic diagram of the hardware structure of the network unit implementing the communication method provided in an embodiment of the present application. Referring to this figure, at the hardware level, the network unit includes a processor, and optionally, an internal bus, network interface, and storage. Wherein the storage may include memory, such as high-speed Random-Access Memory (RAM), and may also include non-volatile memory, such as at least one disk storage. Of course, the network unit may also include hardware required for other business.

The processor, network interface, and memory can be interconnected through an internal bus, which can be the Industry Standard Architecture (ISA) bus, Peripheral Component Interconnect (PCI) bus, or Extended Industry Standard Architecture (EISA) bus. The bus can be divided into address bus, data bus, control bus, etc. For ease of representation, only one bidirectional arrow is illustrated in the drawings, but it does not indicate that there is only one bus or one type of bus.

Memory, used to store programs. Specifically, the program may include program code, which includes computer operation instructions. Memory can include both inter memory and non-volatile memory, and provide instructions and data to the processor.

The processor reads the corresponding computer program from non-volatile memory into inter memory and runs it, forming a device that locates the specified user at the logical level. The processor executes the program stored in the memory and is specifically used to execute the methods disclosed in the embodiments shown in Figs. 2 and 5, and to achieve the functions and beneficial effects of the methods described in the previous embodiments. It will not be repeated here.

The methods disclosed in the embodiments shown in Figs. 2 and 5 of the present application can be applied to processors or implemented by processors. A processor may be an integrated circuit chip with signal processing capabilities. In the implementation process, each step of the above method can be completed through hardware integrated logic circuits or software instructions in the processor. The above-mentioned processor can be a general-purpose processor, including a Central Processing Unit (CPU), a Network Processor (NP), etc; It can also be a Digital Signal Processor (DSP), Application Specific Integrated Circuit (ASIC), Field Programmable Gate Array (FPGA), or other programmable logic devices, discrete gates or transistor logic devices, or discrete hardware components. The disclosed methods, steps, and logical diagrams in the embodiments of the present application can be implemented or executed. A general-purpose processor can be a microprocessor or any conventional processor. The steps of the method disclosed in the embodiments of the present application can be directly reflected as being executed by a hardware decoding processor, or executed by a combination of hardware and software modules in the decoding processor. Software modules can be located in mature storage media in this field, such as random access memory, flash memory, read-only memory, programmable read-only memory, or electrically erasable programmable memory, registers, etc. The storage media is located in the memory, and the processor reads the information from the memory and completes the steps of the above method in conjunction with its hardware.

This network unit can also execute the various methods described in the previous method embodiments, and achieve the functions and beneficial effects of the various methods described in the previous method embodiments, which will not be repeated here.

Of course, in addition to software implementation, the network unit of the present application does not exclude other implementations, such as logic devices or a combination of software and hardware. That is to say, the executing subject of the following processing flow is not limited to each logic unit, but can also be hardware or logic devices.

The embodiments of the present application also propose a computer-readable storage media that stores one or more programs. When executed by an electronic device comprising multiple application programs, the one or more programs enable the electronic device to perform the methods disclosed in the embodiments shown in Figs. 2 and 5 and achieve the functions and beneficial effects of the various methods described in the previous embodiments, which will not be repeated here.

Wherein the computer-readable storage media includes Read Only Memory (ROM), Random Access Memory (RAM), magnetic disk or optical disk, etc.

Furthermore, the embodiments of the present application also provide a computer program product, which comprises a computer program stored on a non transient computer-readable storage medium, the computer program comprising program instructions. When the program instructions are executed by a computer, the following process is implemented: the methods disclosed in the embodiments shown in Figs. 2 and 5 and the functions and beneficial effects of the methods described in the previous embodiments are implemented, which will not be repeated here.

In summary, the above description is only a preferred embodiment of the present application and is not intended to limit the protection scope of the present application. Any modifications, equivalent substitutions, improvements, etc. made within the spirit and principles of the present application shall be included within the protection scope of the present application.

The system, device, module, or unit described in the above embodiments can be implemented by computer chips or entities, or by products with certain functions. A typical implementation device is a computer. Specifically, computers can include personal computers, laptops, cellular phones, camera phones, smartphones, personal digital assistants, media players, navigation devices, email devices, game consoles, tablets, wearable devices, or any combination of these devices.

Computer readable media, including permanent and non-permanent, removable and non-removable media, can be used by any method or technology to achieve information storage. Information can be computer-readable instructions, data structures, modules of programs, or other data. Examples of storage media for computers include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, read-only optical disc read-only memory (CD-ROM), digital versatile disc (DVD) or other optical storage, magnetic tape cartridges, magnetic disk storage or other magnetic storage devices, or any other non-transmission media that can be used to store information that can be accessed by computing devices. According to the definition in this article, computer-readable media does not include transitory media such as modulated data signals and carriers.

It should be noted that, the terms "include", "comprises" or any other variants thereof herein are intended to cover non-exclusive inclusion, so that a process, method, article or system including a series of elements includes not only those elements, but also other elements not explicitly listed, or also includes elements inherent to such process, method, article or system. In the absence of further restrictions, an element defined by the sentence "comprising a ..." does not exclude the presence of other identical elements in the process, method, article or system comprising the element.

The various embodiments in this manual are described in a progressive manner, and the same and similar parts between each embodiment can be referred to each other. Each embodiment focuses on the differences from other embodiments. Especially for the system embodiments, due to its basic similarity to the method embodiments, the description is relatively simple. For relevant information, please refer to the partial explanation of the method embodiments.

## Claims

1. A communication method, applied to a first network element, the method comprising:
communicating with a second network element based on a target bus;
wherein the target bus comprises a service based bus SBI and/or a data channel bus DCI, the SBI is used to provide interaction of signaling and first data between network elements, and the DCI is used to provide interaction of second data between network elements.

2. The method according to claim 1, wherein the second data comprises at least one of the following:
data with a volume exceeding a first threshold;
data beyond the service capabilities of SBI;
data with interaction frequency greater than a second threshold.

3. The method according to claim 1, wherein communicating with the second network element based on the target bus comprises:
receiving a data transmission notification sent by the second network element based on the SBI;
wherein the data transmission notification carries or indicates a data transmission mode, which is used to indicate whether the second network element transmits target data to the first network element based on SBI or DCI.

4. The method according to claim 3, wherein in the case where the data transmission mode indicates that the second network element transmits target data to the first network element based on SBI, the data transmission notification also carries the target data.

5. The method according to claim 3, wherein in the case where the data transmission mode indicates that the second network element transmits target data to the first network element based on DCI, the data transmission notification also carries or indicates at least one of the following:
protocol relevant information used for the target data transmission;
information relevant to data encryption.

6. The method according to claim 5, wherein communicating with the second network element based on the target bus further comprises:
sending a first data service request to the second network element based on the data transmission notification, wherein the first data service request is used to request the target data;
receiving a data service response sent by the second network element based on the DCI, wherein the data service response carries the target data.

7. The method according to any one of claims 3-6, wherein before receiving the data transmission notification sent by the second network element based on the SBI, communicating with the second network element based on the target bus further comprises:
the first network element sending a data subscription request or a second data service request to the second network element based on the SBI;
wherein the data subscription request is used to subscribe to the target data from the second network element, and the second data service request is used to request the target data from the second network element.

8. The method according to any one of claims 1-6, wherein the first network element is any one of network control unit NCU, network packet unit NPU, network data unit NDU, or network intelligence unit NIU;
the second network element is any one of the NCU, NPU, NDU, or NIU;
wherein the NCU is used to provide network control relevant functions, the NPU is used to provide network packet forwarding relevant functions, the NDU is used to provide data centric data management relevant functions, and the NIU is used to provide intelligent endogenous relevant functions.

9. A communication method, applied to a second network element, the method comprising:
communicating with a first network element based on a target bus;
wherein the target bus comprises a service based bus SBI and/or a data channel bus DCI, the SBI is used to provide interaction of signaling and first data between network elements, and the DCI is used to provide interaction of second data between network elements.

10. The method according to claim 9, wherein the second data comprises at least one of the following:
data with a volume exceeding a first threshold;
data beyond the service capabilities of SBI;
data with interaction frequency greater than a second threshold.

11. The method according to claim 9, wherein communicating with the first network element based on the target bus comprises:
the second network element determining a data transmission mode based on relevant information of the target data, wherein the data transmission mode comprises whether the second network element transmits target data to the first network element based on SBI or DCI;
sending a data transmission notification to the first network element based on the SBI, wherein the data transmission notification carries or indicates the data transmission mode.

12. The method according to claim 9, wherein the relevant information of the target data comprises at least one of the following:
volume size of the target data;
data type of the target data;
data interaction frequency of the target data;
data security requirement of the target data.

13. The method according to claim 11, wherein in the case where the data transmission mode comprises that the second network element transmits target data to the first network element based on SBI, the data transmission notification also carries the target data.

14. The method according to claim 11, wherein in the case where the data transmission mode comprises that the second network element transmits target data to the first network element based on DCI, the data transmission notification also carries or indicates at least one of the following:
protocol relevant information used for the target data transmission;
information relevant to data encryption.

15. The method according to claim 14, wherein communicating with the first network element based on the target bus further comprises:
receiving a first data service request sent by the first network element based on the DCI;
sending a data service response to the first network element based on the DCI, wherein the data service response carries the target data.

16. The method according to any one of claims 11-15, wherein communicating with the first network element based on the target bus further comprises at least one of the following:
determining whether a data subscription request or a second data service request sent by the first network element based on the SBI is received, and performing the step of determining the data transmission mode based on the relevant information of the target data based on the data subscription request or the second data service request, wherein the data subscription request is used to subscribe to the target data from the second network element, and the second data service request is used to request the target data from the second network element;
determining whether the target data is changed, and performing the step of determining the data transmission mode based on the relevant information of the target data.

17. The method according to any one of claims 9-15, wherein the first network element is any one of network control unit NCU, network packet unit NPU, network data unit NDU, or network intelligence unit NIU;
the second network element is any one of the NCU, NPU, NDU, or NIU;
wherein the NCU is used to provide network control relevant functions, the NPU is used to provide network packet forwarding relevant functions, the NDU is used to provide data management relevant functions, and the NIU is used to provide intelligent endogenous relevant functions.

18. An electronic device, comprising:
a processor, and
a memory arranged to store computer executable instructions, which, when executed by the processor, cause the electronic device to implement the steps of any one of the methods according to any one of claims 1-8, or implement the steps of any one of the methods according to any one of claims 9-17.

19. A computer readable medium, having one or more programs stored thereon, which, when executed by an electronic device comprising multiple application programs, cause the electronic device to implement the steps of any one of the methods according to any one of claims 1-8, or implement the steps of any one of the methods according to any one of claims 9-17.
